# FASCICULE DE BREVET EUROPEEN

(11) **EP 0 844 111 B1**
(45) Date de publication et mention de la délivrance du brevet: **02.04.2003**
(21) Numéro de dépôt: 97119665.4
(22) Date de dépôt: 10.11.1997
(51) Int. Cl.: B60C 17/06, B60C 17/04

(54) **Insert de sécurité avertisseur**
Sicherheitseinlage mit Warnfunktion
Security insert with emergency signalling function

(30) Priorité: 26.11.1996 FR 9614563
(43) Date de publication de la demande: 27.05.1998
(73) Titulaire: Compagnie Générale des Etablissements MICHELIN-MICHELIN & CIE, 63040 Clermont-Ferrand Cedex 09 (FR)
(72) Inventeur: Muhlhoff, Olivier, 63100 Clermont-Ferrand (FR)
(74) Mandataire: Dequire, Philippe Jean-Marie Denis

(56) Documents cités:
- EP-A- 0 018 831
- WO-A-94/13498
- GB-A- 2 004 234
- US-A- 3 085 615

## Description

L'invention concerne l'utilisation des pneumatiques équipés d'un insert de sécurité et plus particulièrement, la détection de la mise en appui du pneumatique sur l'insert de sécurité. Elle propose un tel insert qui avertit le conducteur dès que le pneumatique est en appui sur lui après crevaison ou en cas de perte de pression importante.

La fonction de ces inserts de sécurité qui sont, en général, montés sur la jante à l'intérieur du pneumatique, est de reprendre la charge en cas de défaillance du pneumatique.

La mise en appui du pneumatique sur l'insert de sécurité s'accompagne d'une dégradation plus ou moins marquée de ses performances qui peut ne pas être perceptible par le conducteur à travers le comportement et le confort du véhicule. De plus, la durée de vie en fonctionnement de ces inserts est limitée. Il est donc essentiel, pour sa sécurité, que le conducteur soit averti dès qu'un pneumatique est en appui sur son insert de sécurité, pour qu'il puisse se conformer aux instructions de leur fabricant.

Plusieurs inserts de sécurité incorporant des moyens pour avertir le conducteur de la mise en appui ont déjà été proposés.

Le brevet US 4 262 724, correspondant au préambule de la revendication 1, propose notamment un insert de sécurité destiné à être monté dans un ensemble comprenant un pneumatique et une jante et radialement extérieurement relativement à la jante. Cet insert a une surface radialement extérieure qui définit un appui radial pour le sommet du pneumatique lorsque le pneumatique est dégonflé, et dont le rayon de roulement sous appui varie entre un rayon minimum et un rayon maximum pour créer une vibration en roulage. Plus précisément, cette surface radialement extérieure présente deux plages circonférentielles la première de rayon maximum, la seconde de rayon minimum reliées par des zones de transition de rayons intermédiaires.

Ce brevet propose aussi d'incorporer à l'insert de sécurité une ou plusieurs bosses. Cette solution entraîne un fort désagrément de conduite, notamment aux basses vitesses. Cette solution ne permet que d'éviter l'immobilisation instantanée du véhicule en cas de défaillance du pneumatique. En revanche, lorsque l'on souhaite utiliser le véhicule, même à vitesse limitée, sur de longues distances, l'avertissement transmis par l'insert doit être compatible avec la sécurité de conduite, non pénalisant pour la mécanique, tout en restant parfaitement remarquable par le conducteur.

Au regard de ces difficultés, l'invention a pour objet un insert de sécurité qui avertit le conducteur dès la mise en appui du pneumatique dans une large gamme de vitesses du véhicule tout en conservant un caractère supportable à la fois pour le conducteur et la mécanique, dans la gamme des vitesses autorisées.

L'insert de sécurité selon l'invention, destiné à être monté dans un ensemble comprenant un pneumatique et une jante et radialement extérieurement relativement à la jante, le rayon de roulement sous appui dudit insert de sécurité variant entre un rayon minimum et un rayon maximum pour créer une vibration en roulage, est caractérisé en ce que ledit rayon de roulement varie sensiblement sinusoïdalement entre le rayon maximum et le rayon minimum pour créer une vibration de fréquence égale à la fréquence de rotation dudit ensemble pneumatique et jante.

Cet insert de sécurité a l'avantage de produire lors du roulage en appui une vibration dont l'énergie croît avec la vitesse du véhicule dans une large gamme de vitesses. L'interprétation de cette vibration dans cette gamme de vitesse par le conducteur est donc sans équivoque. Cette vibration est supportable par les conducteurs à basse vitesse tout en restant perceptible à des vitesses élevées, même lorsque, au-delà d'une certaine vitesse, son énergie n'augmente plus avec la vitesse.

Selon un premier mode de réalisation de l'insert de sécurité selon l'invention, le rayon de la surface radialement extérieure dudit insert de sécurité varie sensiblement sinusoïdalement entre un rayon minimum et un rayon maximum.

Cet insert de sécurité peut comporter une plage cylindrique de rayon maximum inférieure au quart de la circonférence de la surface radialement extérieure de l'insert de sécurité.

Les vibrations produites par un tel insert, lors d'un roulage en appui, sont pratiquement toujours limitées à sa fréquence de rotation.

Une variante de ce premier mode de réalisation d'un insert de sécurité selon l'invention, consiste en ce que la surface radialement extérieure de l'insert de sécurité est cylindrique avec son axe central décentré relativement à l'axe de rotation de l'ensemble pneumatique et jante.

Selon un second mode de réalisation, la variation du rayon de roulement sous appui de l'insert de sécurité selon l'invention est obtenue par une variation circonférentielle de la rigidité radiale dudit insert.

Cette variation circonférentielle de la rigidité radiale de l'insert de sécurité peut notamment être obtenue par une variation circonférentielle de la teneur relative d'au moins deux matériaux de rigidités différentes, ou par une variation circonférentielle de densité.

Bien entendu, la variation du rayon de roulement sous appui peut aussi être obtenue par une combinaison des variations circonférentielles de rayon, de rigidité et de densité.

Le caractère supportable ou non des vibrations produites lors d'un roulage sous appui par l'insert de sécurité selon l'invention est directement lié à l'amplitude de variation du rayon de roulement sous appui. Cette amplitude est avantageusement comprise entre 1,5 et 4,0 % du diamètre du pneumatique et préférentiellement 2,5 et 3,0 %.

Avantageusement, l'insert de sécurité selon l'invention comporte en plus des moyens pour générer en appui un bruit de roulement. Ces moyens peuvent être un ensemble de barrettes d'amplitude comprise entre 0,1 et 1,0 % du diamètre du pneumatique. Ce bruit de roulement, insuffisant à lui seul, a pour avantage de rappeler au conducteur le roulage en appui, notamment aux vitesses élevées.

L'insert de sécurité selon l'invention a aussi, de préférence, un balourd statique nul.

Les figures suivantes illustrent plusieurs modes de réalisation de l'invention et permettent d'en saisir tous les avantages :
- la figure 1 est une vue en coupe schématique d'une jante de roue équipée d'un insert de sécurité ;
- la figure 2 présente un insert de sécurité selon l'invention : en coupe circonférentielle, fig. 2(a), et en coupe axiale, fig. 2(b) ;
- la figure 3 présente une coupe circonférentielle d'un insert de sécurité de l'état de la technique avec deux plages de rayon maximum ;
- la figure 4 donne l'évolution de l'intensité vibratoire produite par les inserts de sécurité des figures 2 et 3 en fonction de la vitesse de roulage pour un véhicule donné ;
- la figure 5 présente une coupe circonférentielle d'une variante d'insert de sécurité selon l'invention ; et
- la figure 6 présente une autre variante d'insert de sécurité selon l'invention.

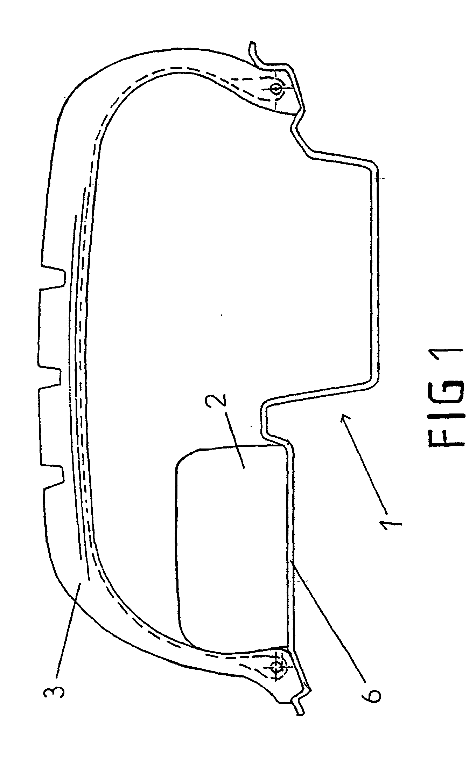

On voit à la Figure 1 une jante 1 de roue équipée d'un insert annulaire de sécurité 2. La géométrie particulière de cette jante 1 de roue est notamment décrite dans la demande de brevet français n° 2 713 558. Elle présente deux sièges de bourrelets de diamètres différents et est particulièrement adaptée pour la mise en place aisée de cet insert de sécurité 2. Cet ensemble permet le roulage malgré une baisse de pression importante dans le pneumatique 3. Dans le cas d'un tel roulage, l'intérieur du pneu déformé frotte sur la surface extérieure de l'insert provoquant un échauffement qui limite le rayon d'action disponible : il importe donc que le conducteur soit informé dès la mise en appui d'un pneumatique sur son insert 2.

A cet effet, on utilise avantageusement comme insert un insert de sécurité selon l'invention dont le rayon de roulement sous appui est variable avec une fréquence de variation sensiblement égale à sa fréquence de rotation.

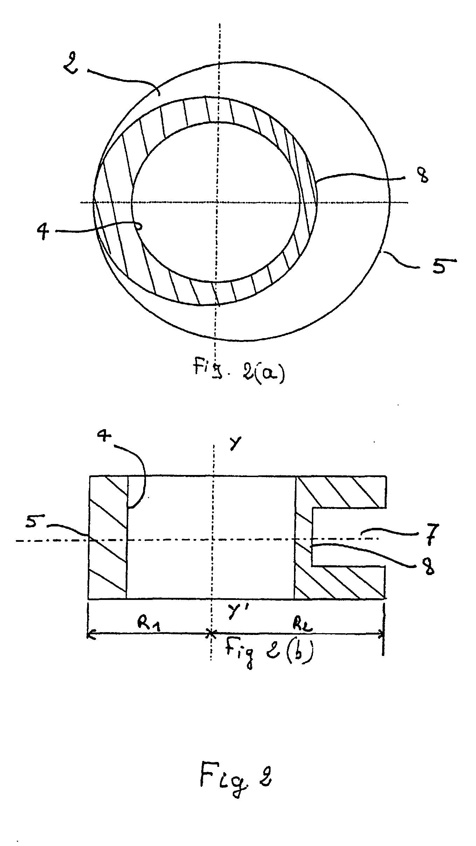

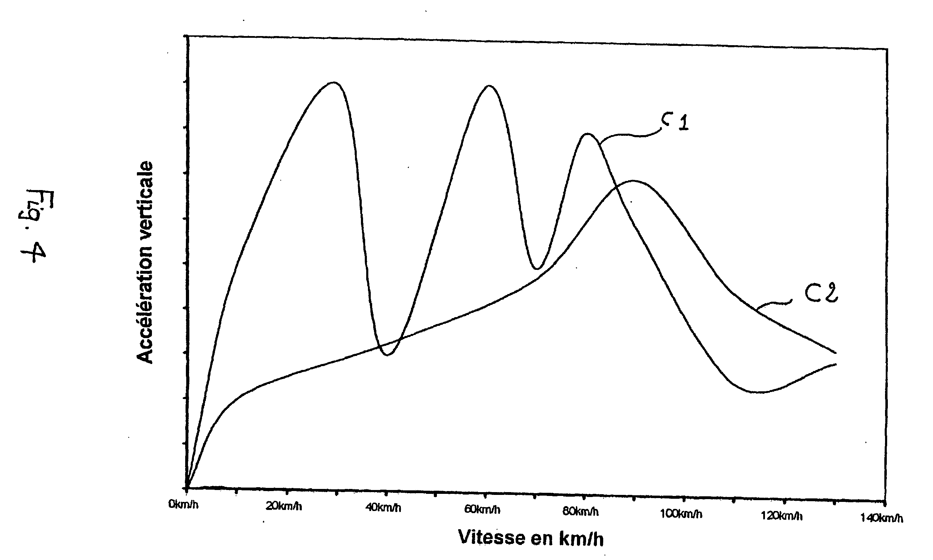

Un tel insert est présenté à la figure 2. Il présente une surface radialement intérieure 4 cylindrique de rayon sensiblement égal à celui de la portée 6 de la jante 1. Sa surface radialement extérieure 5 est elle aussi cylindrique mais d'axe central décentré par rapport à l'axe central YY' de la surface 4 qui est aussi l'axe de rotation de l'ensemble pneumatique, jante, insert de sécurité. En conséquence, le rayon de la surface extérieure 5 varie entre un rayon minimum R₁ et un rayon maximum R₂ (figure 2(b)). Ces deux rayons sont diamétralement opposés. Comme la surface extérieure 5 est cylindrique, le rayon de cette surface relativement à l'axe YY' de rotation de l'ensemble pneumatique, jante et insert de sécurité varie de façon sensiblement sinusoïdale entre R₁ et R₂. L'insert de sécurité 2 comporte une cavité 7, ouverte radialement extérieurement, dont la section droite varie continûment angulairement pour que le centre de gravité de l'insert soit sur l'axe YY' et ainsi obtenir un balourd statique nul. Cette cavité 7 s'annule au point où le rayon de la surface extérieure 5 de l'insert 2 est minimum. La cavité 7 pourrait aussi être totalement interne ou ouverte latéralement.

Pour l'équipement de pneumatiques de dimensions 185/70 x 350 (dimensions exprimées en millimètres), l'écart entre les rayons R₁ et R₂ est de l'ordre de 15 mm. Comme le diamètre de ces pneumatiques est d'environ 500 mm, l'écart entre les deux rayons est donc de l'ordre de 3 % de ce diamètre. En fonction des véhicules et pneumatiques concernés, l'écart entre ces rayons peut varier sensiblement, tout en restant, de préférence de l'ordre de 2,5 à 3 % du diamètre des pneumatiques.

L'insert de sécurité 2 a une rigidité radiale suffisante pour que l'écrasement subit sous charge ne modifie pas substantiellement l'écart précédent de 15 mm lors d'un roulage sous appui. Un tel insert est réalisé par exemple en un caoutchouc rigide, en polyuréthanne rigide ou en nylon. Il peut aussi être réalisé en un caoutchouc de module de cisaillement relativement bas lorsqu'il est massif. Il peut comporter une nappe de forte rigidité circonférentielle disposée le long de la surface intérieure 4. La surface extérieure de l'insert est de préférence lubrifiée pour limiter les échauffements lors d'un roulage sous appui et ainsi améliorer son endurance.

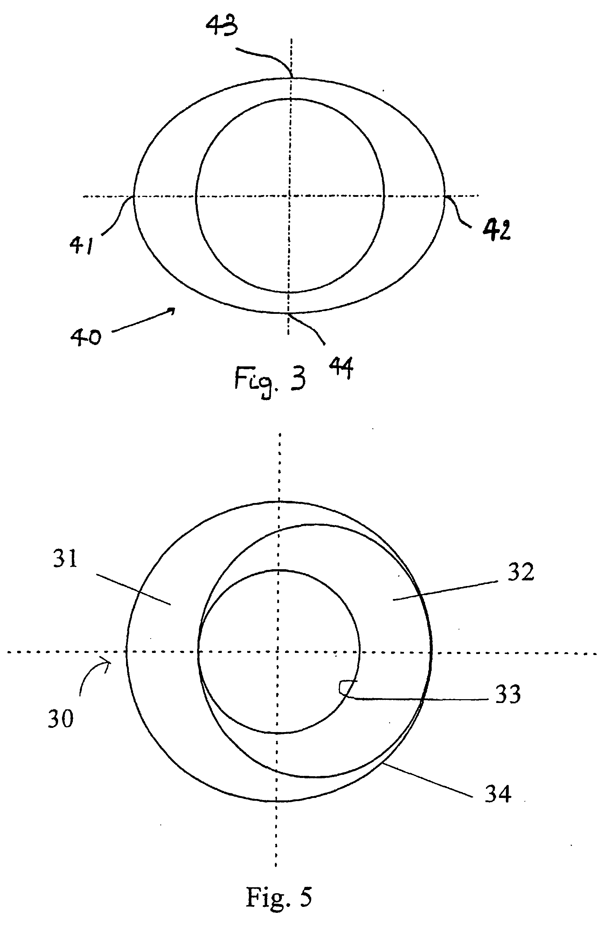

La figure 3 présente, en coupe circonférentielle, un insert de sécurité 40 connu, de géométrie proche de celui présenté à la figure 20 du brevet US 4 262 724. Cet insert a deux plages de rayon maximum 41 et 42 séparées par deux plages 43 et 44 de rayon minimum. La transition entre ces plages est très progressive.

La figure 4 présente l'évolution de l'intensité vibratoire produite par des inserts de sécurité 2 et 40, de même amplitude R₂ - R₁, en fonction de la vitesse de roulage pour un véhicule de marque Peugeot, modèle 405. On a équipé ce véhicule d'un capteur d'accélération verticale disposé sur le siège du conducteur. Ce capteur quantifie ainsi l'excitation transmise au conducteur et perceptible par lui.

La courbe C1 présente l'évolution des mesures d'accélération verticale réalisées en fonction de la vitesse du véhicule avec l'un des pneumatiques complètement dégonflé, ce pneumatique étant équipé d'un insert de sécurité 40 avec deux plages de rayon maximum tel celui de la figure 3.

Cette courbe C1 montre que l'accélération verticale produite par l'excentration de l'insert 40 lors de son roulage en appui évolue de façon sensiblement proportionnelle à la vitesse jusqu'à environ 30 km/h. Ensuite, on observe une diminution très marquée suivie de deux autres maxima. Au-delà de 85 km/h, la diminution est particulièrement marquée. Cet insert a donc une plage d'utilisation correcte très réduite, limitée à environ 30 km/h. Ensuite, l'évolution est très variable et est donc impossible à interpréter de façon satisfaisante par un conducteur usuel.

La courbe C2 présente l'évolution de l'intensité de l'accélération verticale mesurée lorsque le pneumatique dégonflé est équipé d'un insert 2 selon l'invention. Dans ce cas, l'évolution de l'accélération verticale reste pratiquement proportionnelle à la vitesse du véhicule jusqu'à environ 100 km/h. Ensuite cette intensité diminue.

Le fonctionnement de cet insert est donc particulièrement satisfaisant jusqu'à des vitesses relativement élevées puisque l'intensité de l'avertissement est proportionnelle à la vitesse du véhicule.

En fait, pendant toute la première partie de cette courbe, le sommet du pneumatique dégonflé est continûment en appui sur la surface radialement extérieure de l'insert. Le centre roue subit donc, à chaque tour de roue, une variation de position relativement au sol correspondant sensiblement à l'écart entre R₁ et R₂ (aux variations d'écrasement près). L'augmentation de l'intensité de l'accélération verticale mesurée est ainsi directement liée à l'augmentation de la fréquence de rotation de la roue et de l'insert.

En revanche, au-delà du maximum de la courbe C2, en raison de l'inertie de l'ensemble roue/pneumatique/insert..., le sommet du pneumatique n'est plus continûment en appui sur la surface radialement extérieure de l'insert, notamment contre la partie de rayon minimum R₁. En conséquence, la variation de position relativement au sol du centre roue est inférieure à l'écart entre R₁ et R₂ (aux variations d'écrasement près) et diminue progressivement avec l'augmentation de la vitesse du véhicule. Corrélativement, l'intensité de l'accélération verticale mesurée diminue aussi.

Il est donc essentiel pour qu'un insert soit efficace dans la gamme de vitesses la plus élevée possible de n'avoir qu'une seule plage de rayon maximum par tour, de diminuer au maximum l'amplitude circonférentielle de cette plage et d'avoir une transition progressive entre R₁ et R₂. C'est ce qui est réalisé avec un insert selon l'invention qui a une variation sensiblement sinusoïdale entre les rayons maximum et minimum.

Cette forme particulière a aussi l'avantage de produire une vibration de fréquence sensiblement égale à la fréquence de rotation de l'insert uniquement. Toute l'énergie de vibration est ainsi concentrée dans cette fréquence qui est aisément transmissible au conducteur par les divers éléments de la suspension du véhicule.

Un insert avec une plage de rayon maximum s'étendant sur au plus 25 % de la circonférence de l'insert donne aussi substantiellement des résultats très proches.

Au contraire de l'insert de l'invention, les inserts proposé par le brevet US 4 262 724 comporte plusieurs plages circonférentielles de rayon maximum (figure 20) ou une seule plage mais avec une amplitude circonférentielle de 75 % de la circonférence (figure 14 et 18) ou égale à 50 % (exemples). De tels inserts, comme nous l'avons vu, ne sont efficaces que dans une plage de vitesses beaucoup plus restreinte que celle des inserts selon l'invention. De plus, ces inserts présentent des zones de transition entre les plages de rayon maximum et minimum qui sont brutales (voir figure 14). En conséquence ces zones se comportent comme de véritables bosses qui contribuent à rendre très désagréable le roulage en appui même à faible vitesse.

Dans l'exemple précédent, la variation de rayon de roulement lors d'un roulage en appui est obtenue par la variation du rayon de l'insert. Il est aussi possible d'obtenir cette variation de rayon de roulement par beaucoup d'autres moyens.

A titre d'exemple, la figure 5 présente un insert 30 cylindrique comprenant deux matériaux de rigidités différentes 31 et 32. La proportion de chaque matériau varie continûment angulairement pour obtenir une variation sensiblement sinusoïdale de la rigidité radiale et ainsi du rayon de roulement de l'insert à l'état écrasé. Dans cet exemple, les surfaces radialement intérieure 33 et extérieure 34 de l'insert 30 sont coaxiales.

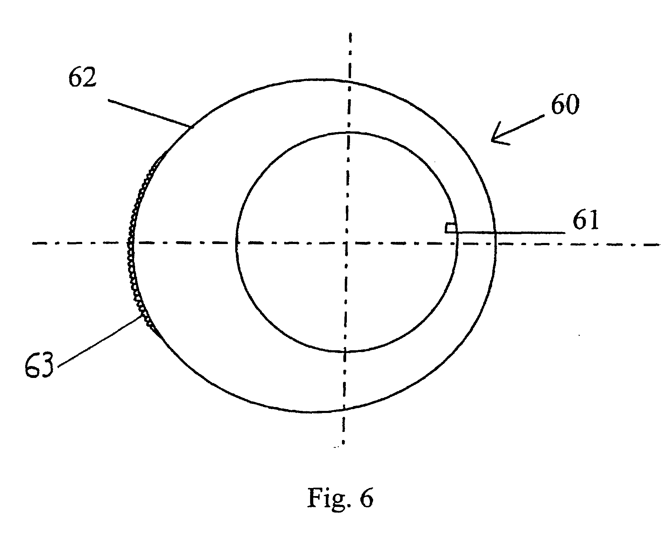

Pour compléter l'effet avertisseur de l'insert de sécurité selon l'invention, aux vitesses élevées, on peut ajouter sur la surface extérieure de l'insert des barrettes. Comme aux vitesses élevées, l'appui entre le sommet du pneumatique et la surface radialement extérieure de l'insert est de plus en plus limité à la plage de rayon maximum et autour, ces barrettes sont à placer préférentiellement dans cette zone. Celles-ci ont pour but de créer un bruit de sifflement perceptible par le conducteur. La figure 6 présente un insert 60 équipé de telles barrettes 63 de forme demi cylindrique disposées selon l'axe de rotation de l'insert 60. Leur amplitude doit être inférieure à celle de l'écart des rayons R₁ et R₂ pour ne pas perturber aux basses vitesses la vibration excitatrice de fréquence égale à la fréquence de rotation de l'insert produite. Une amplitude satisfaisante est de l'ordre de 0,1 à 1 % du diamètre du pneumatique soit, dans l'exemple précédent, de l'ordre de 0,5 à 5 mm.

Comme pour l'insert 2 de la figure 2, les surfaces radialement intérieure 61 et extérieure 62 sont cylindriques mais non coaxiales. Les barrettes 63 sont régulièrement réparties sur la surface de l'insert de part et d'autre du rayon maximum R₂. Leur nombre est par exemple de l'ordre de 10 à 100 et préférentiellement de 10 à 60. Dans l'exemple présenté, le nombre de barrettes est une trentaine.

## Revendications

1. Insert de sécurité (2, 30, 60) destiné à être monté dans un ensemble comprenant un pneumatique (3) et une jante (1) et radialement extérieurement relativement à la jante (1), ledit insert ayant une surface radialement extérieure (5, 34, 62) qui définit un appui radial pour le sommet du pneumatique lorsque ledit pneumatique est dégonflé, le rayon de roulement sous appui dudit insert de sécurité variant entre un rayon minimum et un rayon maximum pour créer une vibration en roulage, **caractérisé en ce que** ledit rayon de roulement varie sensiblement sinusoïdalement entre le rayon maximum et le rayon minimum pour créer une vibration de fréquence égale à la fréquence de rotation dudit ensemble pneumatique et jante.

2. Insert de sécurité (2, 60) selon la revendication 1, dans lequel le rayon de la surface radialement extérieure (5, 62) varie sensiblement sinusoïdalement entre un rayon minimum et un rayon maximum.

3. Insert de sécurité (2, 60) selon la revendication 2, dans lequel la surface radialement extérieure (5, 62) comporte une plage cylindrique de rayon maximum, inférieure au quart de la circonférence de ladite surface extérieure.

4. Insert de sécurité (2, 60) selon la revendication 1, dans lequel la surface radialement extérieure (5, 62) dudit insert de sécurité est cylindrique avec son axe central excentré relativement à l'axe de rotation de l'ensemble pneumatique et jante.

5. Insert de sécurité (30) selon la revendication 1, dans lequel la variation du rayon de roulement sous appui dudit insert de sécurité est obtenue par variation circonférentielle de la rigidité radiale dudit insert.

6. Insert de sécurité (30) selon la revendication 5, dans lequel la variation circonférentielle de rigidité radiale est liée à une variation circonférentielle de la teneur relative d'au moins deux matériaux de rigidités différentes.

7. Insert de sécurité selon la revendication 4, dans lequel la variation circonférentielle de rigidité radiale est liée à une variation circonférentielle de la densité dudit insert de sécurité.

8. Insert de sécurité (5, 30, 60) selon l'une des revendications 1 à 7, dans lequel la variation du rayon de roulement sous appui dudit insert de sécurité est comprise entre 1,5 et 4,0 % du diamètre dudit pneumatique.

9. Insert de sécurité (5, 30, 60) selon la revendication 8, dans lequel la variation du rayon de roulement sous appui dudit insert de sécurité est comprise entre 2,5 et 3,0 % du diamètre dudit pneumatique.

10. Insert de sécurité (60) selon l'une des revendications 1 à 9, tel qu'il comporte en plus des moyens (63) pour générer un bruit de roulement.

11. Insert de sécurité (60) selon la revendication 10, dans lequel les moyens pour générer un bruit de roulement comprennent un ensemble de 10 à 100 barrettes (63) orientées transversalement et réparties sur la plage de rayon maximum et de part et d'autre de celle-ci.

12. Insert de sécurité (60) selon l'une des revendications 10 et 11, dans lequel les barrettes (63) ont une hauteur comprise entre 0,1 et 1 % du diamètre dudit pneumatique.

13. Insert de sécurité (5, 30, 60) selon l'une des revendications 1 à 12, tel que son balourd statique est nul.

14. Insert de sécurité (5, 30, 60) selon la revendication 13, comportant une cavité (7) dont la section droite varie continûment angulairement de telle sorte que son balourd statique est nul.

## Claims

1. A safety insert (2, 30, 60) intended to be mounted in an assembly comprising a tyre (3) and a rim (1) and to be mounted radially externally relative to the rim (1), said insert having a radially outer surface (5, 34, 62) which defines a radial support for the crown of the tyre when said tyre is deflated, the running radius of said safety insert under run-flat conditions varying between a minimum radius and a maximum radius in order to create a running vibration, **characterised in that** said running radius varies substantially sinusoidally between the maximum radius and the minimum radius in order to create a vibration the frequency of which is equal to the frequency of rotation of said tyre and rim assembly.

2. A safety insert (2, 60) according to Claim 1, wherein the radius of the radially outer surface (5, 62) varies substantially sinusoidally between a minimum radius and a maximum radius.

3. A safety insert (2, 60) according to Claim 2, wherein the radially outer surface (5, 62) comprises a cylindrical region with maximum radius that represents less than one quarter of the circumference of said outer surface.

4. A safety insert (2, 60) according to Claim 1, wherein the radially outer surface (5, 62) of said safety insert is cylindrical with its central axis offset relative to the axis of rotation of the tyre and rim assembly.

5. A safety insert (30) according to Claim 1, wherein the variation in running radius of said safety insert under run-flat conditions is obtained by circumferential variation in the radial rigidity of said insert.

6. A safety insert (30) according to Claim 5, wherein the circumferential variation in radial rigidity is connected to a circumferential variation in the relative contents of at least two materials with different rigidities.

7. A safety insert according to Claim 4, wherein the circumferential variation in radial rigidity is connected to a circumferential variation in the density of said safety insert.

8. A safety insert (5, 30, 60) according to one of Claims 1 to 7, wherein the variation in running radius of said safety insert under run-flat conditions is between 1.5 and 4.0% of the diameter of said tyre.

9. A safety insert (5, 30, 60) according to Claim 8, wherein the variation in running radius of said safety insert under run-flat conditions is between 2.5 and 3.0% of the diameter of said tyre.

10. A safety insert (60) according to one of Claims 1 to 9, such that it further comprises means (63) for generating running noise.

11. A safety insert (60) according to Claim 10, wherein the means for generating a running noise comprise a collection of 10 to 100 strips (63) oriented transversely and distributed over the maximum-radius region and on either side thereof.

12. A safety insert (60) according to one of Claims 10 and 11, wherein the strips (63) have a height of between 0.1 and 1% of the diameter of said tyre.

13. A safety insert (5, 30, 60) according to one of Claims 1 to 12, such that its static imbalance is zero.

14. A safety insert (5, 30, 60) according to Claim 13, which comprises a cavity (7) whose cross-section varies angularly continuously so that its static imbalance is zero.

## Patentansprüche

1. Sicherheitseinlage (2, 30, 60), die dazu bestimmt ist, in einer Gruppe, die einen Reifen (3) und eine Felge (1) aufweist, sowie radial außerhalb der Felge (1) montiert zu werden, wobei die genannte Einlage eine radial äußere Oberfläche (5, 34, 62) aufweist, die eine radiale Auflage für den Scheitel des Reifens bildet, wenn der genannte Reifen nicht aufgepumpt ist, und wobei der Rollradius bei Auflage der genannten Sicherheitseinlage zwischen einem Mindestradius und einem Höchstradius variiert, um bei Fahrt eine Schwingung zu erzeugen, **dadurch gekennzeichnet, daß** sich der genannte Rollradius im wesentlichen sinusartig zwischen dem Höchstradius und dem Mindestradius ändert, um eine Schwingung mit einer Frequenz zu erzeugen, die der Drehfrequenz der genannten Gruppe aus Felge und Reifen gleich ist.

2. Sicherheitseinlage (2, 60) nach Anspruch 1, worin der Radius der radial äußeren Oberfläche (5, 62) sich im wesentlichen sinusartig zwischen einem Mindestradius und einem Höchstradius ändert.

3. Sicherheitseinlage (2, 60) nach Anspruch 2, worin die radial äußere Oberfläche (5, 62) einen zylindrischen Bereich mit Höchstradius aufweist, der kleiner als ein Viertel des Umfangs der genannten äußeren Oberfläche ist.

4. Sicherheitseinlage (2, 60) nach Anspruch 1, worin die radial äußere Oberfläche (5, 62) der genannten Sicherheitseinlage zylindrisch ist, wobei ihre Mittelachse relativ zur Drehachse der Gruppe aus Reifen und Felge exzentrisch ist.

5. Sicherheitseinlage (30) nach Anspruch 1, worin die Änderung des Rollradius bei Auflage der genannten Sicherheitseinlage durch Änderung der radialen Steifigkeit der genannten Einlage in Umfangsrichtung erhalten ist.

6. Sicherheitseinlage (30) nach Anspruch 5, worin die Änderung der radialen Steifigkeit in Umfangsrichtung mit einer Änderung des relativen Gehalts an mindestens zwei Materialien mit unterschiedlichen Steifigkeiten in Umfangsrichtung verbunden ist.

7. Sicherheitseinlage nach Anspruch 4, worin die Änderung der radialen Steifigkeit in Umfangsrichtung mit einer Änderung der Dichte der genannten Sicherheitseinlage in Umfangsrichtung verbunden ist.

8. Sicherheitseinlage (5, 30, 60) nach einem der Ansprüche 1 bis 7, worin die Änderung des Rollradius bei Auflage der genannten Sicherheitseinlage zwischen 1,5 und 4% des Durchmessers des genannten Reifens liegt.

9. Sicherheitseinlage (5, 30, 60) nach Anspruch 8, worin die Änderung des Rollradius bei Auflage der genannten Sicherheitseinlage zwischen 2,5 und 3% des Durchmessers des genannten Reifens liegt.

10. Sicherheitseinlage (60) nach einem der Ansprüche 1 bis 9 derart, daß sie zusätzlich Mittel (63) zum Erzeugen eines Rollgeräusches aufweist.

11. Sicherheitseinlage (60) nach Anspruch 10, worin die Mittel zum Erzeugen eines Rollgeräusches eine Gruppe von 10 bis 100 Leisten (63) aufweisen, die in Querrichtung ausgerichtet sind und über den Bereich mit maximalem Radius sowie beiderseits dessen verteilt sind.

12. Sicherheitseinlage (60) nach einem der Ansprüche 10 und 11, worin die Leisten (63) eine Höhe haben, die zwischen 0,1 und 1 % des Durchmessers des genannten Reifens beträgt.

13. Sicherheitseinlage (5, 30; 60) nach einem der Ansprüche 1 bis 12, der so ausgebildet ist, daß seine statische Unwucht Null ist.

14. Sicherheitseinlage (5, 30, 60) nach Anspruch 13, mit einer Höhlung (7), deren Querschnitt sich fortlaufend winklig derart ändert, daß ihre statische Unwucht Null ist.
